(19) Europäisches Patentamt

European Patent Office

Office européen des brevets

(11) **EP 1 868 400 B1**

(12) **EUROPEAN PATENT SPECIFICATION**

(45) Date of publication and mention
of the grant of the patent:
**13.08.2008 Bulletin 2008/33**

(51) Int Cl.:
***H04Q 7/36*** (2006.01)

(21) Application number: **06290974.2**

(22) Date of filing: **13.06.2006**

(54) **A method of allocating radio resources of a cellular communication network**

Verfahren zum Zuteilen von Funkbetriebsmitteln eines zellularen Kommunikationsnetzwerks

Procédé d'attribution de ressources radio d'un réseau de communication cellulaire

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**19.12.2007 Bulletin 2007/51**

(73) Proprietor: **Alcatel Lucent
75008 Paris (FR)**

(72) Inventor: **Schönerstedt, Lutz
71636 Ludwigsburg (DE)**

(74) Representative: **Schmidt, Werner Karl
Alcatel Lucent
Intellectual Property & Standards
70430 Stuttgart (DE)**

(56) References cited:
**US-A1- 2004 131 007        US-A1- 2005 096 062
US-A1- 2005 237 989        US-A1- 2006 046 734
US-A1- 2006 109 865**

- **3GPP: "OFDM with interference control for
improved HSDPA coverage" 3GPP TSG RAN
WG1 MEETING #37, May 2004 (2004-05), pages
1-11, XP002310556**

## Description

### Field of the invention

The invention relates to a method of allocating radio resources of a cellular communication network to cells of the cellular communication network, to a communication network component, to a communication network, to a mobile station, and to a computer program product that is adapted to perform the method in accordance with the invention.

### Background and related art

A cellular communication network is a radio network made up of a number of radio cells (or just cells), wherein each cell is served by at least one fixed transceiver. A cell is therefore usually defined by the area that is covered by the at least one transceiver. A cellular communication network is also denoted in the following by the term cellular network. The transceivers are also known as cell stations or as base stations, though usually a modern base station comprises more than one transceiver.

The cells of a cellular communication network are used to cover different areas in order to provide radio coverage over a wider area than the area of one cell. Cellular networks are inherently asymmetric with a set of fixed transceivers serving the cell and a set of distributed, not necessarily mobile, transceivers that provide services to the network's users. The latter transceivers are further referred to as mobile stations.

The transceiver stations of a cell employ usually a frequency division multiplexing (FDM) method, a time division multiplexing (TDM) method, a code division multiplexing (CDM) method, or a combination thereof for communicating with a mobile station that is located in the cell and served by one of the transceiver stations.

OFDM (orthogonal frequency division multiplexing) is an example of a FDM method. In OFDM a set of sub-carrier signals is employed as carriers for the transmission of a signal to the mobile station. Especially at the border between two cells, signals from the two cells might overlap. In order to prevent an interference of the overlapping signals, the transceiver stations of the two cells can use different sets of sub-carrier signals that are (at least approximately) orthogonal with respect to each other. The sub-carrier signals that are available to a communication network can therefore be divided according to prior art into various sets of sub-carrier signals and different sets of sub-carriers are made available to neighboring cells. There might be however situations when a first cell is serving many mobile stations so that it reaches the maximum limit of data traffic that can be handled by the set of sub-carriers assigned to the first cell. A second cell that is adjacent to the first cell might in contrast not serve any mobile station. The set of sub-carriers assigned to the second cell is therefore not employed at all and due to the fixed assignment it is also not available to the first cell.

The division of the available sub-carriers into various sets of sub-carrier signals is only an example how the various resources can be made available to the cells of a communication network. The generic term radio resources denotes all types of signals, such as sub-carrier signals or codes in the case of CDMA, that are employed by the cellular network. According to prior art, the available radio resources can be divided into various sets that are then assigned to cells so that neighboring cells can employ different sets of radio resources. This keeps the interferences of overlapping signals especially at the borders between two cells at a low level, but has the disadvantage that a cell might reach the maximum capacity that can be handled by use of the available set of radio resources, whereas other cells might not use their available radio resources at all.

US 2005/0237989 A1 describes a method of allocating sub-carriers in a cell. In particular, a plurality of sub-carriers are allocated to a user equipment in a mobile communication system that uses orthogonal frequency division multiplexing (OFDM). The method comprises allocating the sub-carriers of each cell to at least one sub-carrier group and assigning priorities to each sub-carrier group in each cell. In addition, the method comprises arranging the groups of sub-carriers of each cell in a specified order so that the specified order of the groups of sub-carriers of a cell does not correspond with the order of the groups of sub-carriers of other cells. Furthermore, the method comprises allocating the sub-carriers of the group of sub-carriers to user equipments. According to an embodiment of the method, the method further comprises allocating independently in each cell the sub-carrier groups in an order to minimize intercell interferences of each cell with at least one neighboring cell.

According to US 2005/0096062 A1, to each cell (sector), a set of usable subbands that may be allocated to users in the cell and a set of forbidden subbands that is not used is assigned. The usable and forbidden sets for each cell are orthogonal to one another. The usable set for each cell also overlaps the forbidden set for each neighboring cell. A user u in a cell x may be allocated subbands in the usable set for that cell. If user u observes/ causes high level of interference from/to a neighboring cell y, when user u may be allocated subbands from a 'restricted' set containing subbands included in both the usable set for cell x and the forbidden set for cell y. User u could then observe/cause no interference from/to cell y. The subset restriction may be extended to avoid interference from multiple neighboring cells.

US 2006/046734 A1 discloses a method for managing radio resources in a cellular radio communications system configured as a multi-carrier system. The method comprises transmitting information on at least one frequency band having sub-carriers, wherein the sub-carriers of the at least one frequency band are temporarily available to each radio cell for transmission of information. The method furthermore comprises temporarily assigning the sub-carriers of the at least one frequency band to at least two radio cells with each of the sub-carriers available to a subset of the at least two radio cells for transmission of information.

US 2004/0131007 A1 discloses a method of transmitting a pilot on a downlink in a wireless multi-carrier communication system. The method comprises generating pilot symbols for transmission on a first set of subbands, wherein the first set of subbands is used for pilot transmission by a first transmitting entity and is disjoined from a second set of subbands used for pilot transmission by a second transmitting entity. The method furthermore comprises processing the pilot symbols to obtain a pilot signal having the pilot symbols included in the first set of subbands and substracting the pilot symbol estimates for the second transmitting entity from the received symbols to obtain pilot-cancelled symbols.

According to US 2006/0109865 A1, resources are allocated for data transmission and user data using the allocated resources are transmitted/received. A full sub-carrier band allocable for one cell is divided into a plurality of sub-carrier regions. Sub-carriers selected from sub-carriers existing in one of the plurality of sub-carrier regions are allocated for each of a plurality of sectors constituting the cell. The sub-carriers are allocated such that sub-carriers existing in different sub-carrier regions are allocated for neighboring sectors in the cell.

The article entitled 'OFDM with interference control for improved HSDPA coverage', published in 3GPP, 3GPP meeting number 37, May 2004, pages 1-11, XP002310556 discloses the occurrence of interferences in cell based communication networks, in particular in HSDPA environments.

There is therefore a need for an improved method of allocating the radio resources of a communication network to cells of the network, for an improved communication network component for allocating the radio resources of the cellular network, for an improved cellular communication network, and for a computer program product that is adapted to perform the method in accordance with the invention.

**Summary of the invention**

The invention is defined by a method according to claim 1 and corresponding communication network component according to claim 4 and computer product according to claim 7.

In accordance with an embodiment of the invention, there is provided a method of allocating radio resources of a cellular communication network to cells of the cellular communication network, wherein the method comprises the step of determining a first number of subsets of radio resources from a given set of radio resources. The method further comprises the step of determining a second number of auxiliary sets of radio resources, wherein each auxiliary set of radio resources comprises the subsets of radio resources in a predefined order and the step of assigning one of the second numbers of auxiliary sets of radio resources to each cell of the cellular communication network.

The given set of radio resources comprises the radio resources that are available to the cellular communication network. As mentioned before the radio resources refer to carrier signals or to codes. The set of radio resources is divided into a first number of subsets of radio resources. The first number can for example be specified by an operator of the communication network and the operator can also select the subsets of radio resources. Then, a second number of auxiliary sets of radio resources is determined, wherein each auxiliary set of radio resources comprises the subsets of radio resources in a predefined order. Furthermore one of the second number of auxiliary sets of radio resources is assigned to each cell of the cellular communication network. The second number can also be determined by the operator of the communication network. An auxiliary set of radio resources comprises more than one subset of radio resources. Typically, an auxiliary set of radio resources comprises all subsets of radio resources. Thus all available radio resources of the communication network are made available to the cells of the communication network. This has the advantage that cells can use the full capacity of the radio resources of the communication network when these cells have to handle the communication with a larger amount of mobile stations.

As mentioned before, the subsets of radio resources are comprised in each of the second number of radio resources in a predefined order. Due to the predefined order, a priority is assigned to each of the subsets of radio resources in an auxiliary set of radio resources. The order therefore specifies how the various subsets of radio resources can be employed by the corresponding cell. For example, if an auxiliary set of radio resources comprises a first and a second subset of radio resources, wherein the predefined order specifies that the first subset of radio resources shall be used before the second subset of radio resources, then the cell employs the first subset of radio resources as long as all the communication with the mobile stations can be handled. Only when the full capacity of the first subset of radio resources is utilized, then the second subset of radio resources is further employed for the communication with the mobile stations.

In accordance with an embodiment of the invention, the predefined order of an auxiliary set of radio resources is different from the predefined orders of all other sets of radio resources, wherein different auxiliary sets of radio resources are assigned to neighboring cells, and wherein the predefined order specifies in which order the subsets of radio resources of an auxiliary set of radio resources can be employed by the cell for communication with a mobile station. Two neighboring cells are two cells whose radio coverage areas are at least partly overlapping.

In accordance with an embodiment of the invention, one of the second number of auxiliary sets of radio resources is assigned to each cell of the communication network by the operator or supervisor of the communication network by the scheduler of each cell or by another component of the communication network.

In accordance with an embodiment of the invention, the method in accordance with the invention further comprises the step of determining an interference probability for each combination of two auxiliary sets of radio resources and the step of assigning an auxiliary set of radio resources to each cell, wherein the auxiliary set of radio resources has the lowest possible interference probability with respect to the auxiliary sets of radio resources assigned to neighboring cells of each cell. The interference probability can be calculated for each combination of two auxiliary sets of radio resources. The interference probability between two auxiliary sets of radio resources is at a value between 0 and 1 and denotes the probability for the mutual interference of two auxiliary sets of radio resources. The auxiliary sets of radio resources are assigned to each cell so that interference probabilities of the auxiliary sets of radio resources of neighboring cells are as low as possible. This provides the advantage that interferences from overlapping signals of neighboring cells are kept as low as possible.

The interference probability between two auxiliary sets of radio resources can be determined by only taking the two auxiliary sets of radio resources into account or by also taking the properties of the two cells into account to which the two auxiliary sets of radio resources are assigned to. The interference probability as used here can refer to both cases.

As mentioned above, the subsets of radio resources of the auxiliary sets of resources are employed by the corresponding cells in a predefined order. Thus, the interference probability of each combination of two auxiliary sets of radio resources depends on the amount of mobile stations that are served by the cells using the auxiliary sets of radio resources. An operator or schedulers of the cells that assign the various auxiliary sets of the radio resources to the cells have therefore to consider also the amount of data traffic that has to be handled by the cells to determine the interference probabilities accordingly.

In accordance with an embodiment of the invention, auxiliary sets of radio resources having a low interference probability with respect to each other are assigned to neighboring cells, wherein the neighboring cells have to handle a large amount of data traffic, and auxiliary sets of radio resources having a higher interference probability with respect to each other are assigned to neighboring cells, wherein the neighboring cells have to handle a low amount of radio resources.

In accordance with an embodiment of the invention, auxiliary sets of radio resources having a low interference probability with respect to each other are assigned to neighboring cells, wherein the neighboring cells have to handle a large amount of data traffic in the radio coverage overlapping area, and auxiliary sets of radio resources having a higher interference probability with respect to each other are assigned to neighboring cells, wherein the neighboring cells have to handle a low amount of radio resources in the radio coverage overlapping area.

In accordance with an embodiment of the invention, a usage probability is assigned to each subset of radio resources of an auxiliary set of radio resources, wherein the usage probability determines the probability with which the corresponding subset of radio resources is employed by the cell to which the corresponding auxiliary set of radio resources has been assigned.

In accordance with an embodiment of the invention, the predefined order relates to the usage probability. The predefined order as introduced above can therefore be given by the usage probabilities assigned to the various subsets of radio resources in a set of radio resources.

In accordance with an embodiment of the invention, the interference probability between two auxiliary sets of radio resources is determined by use of the usage probabilities assigned to the auxiliary sets of radio resources. Consider a first auxiliary set of radio resources comprising three subsets of radio resources A, B, C, wherein the usage probabilities $\rho_A$, $\rho_B$, and $p_c$ are assigned to A, B, or C, respectively. Consider a second auxiliary set of radio resources comprising the three subset of radio resources A, B, C, wherein the usage probabilities $q_A$, $q_B$, and $q_C$ are assigned to A, B, or C, respectively. The interference probability between the first and second set of radio resources can then be determined by $1/3*(p_A q_A + p_B q_B + p_C q_C)$, whereby the factor of 1/3 is used as normalization. In accordance with an embodiment of the invention, the method further comprises the steps of assigning an identifier to each auxiliary set of radio resources and of sending in each cell a first message, wherein the first message comprises the identifier of the auxiliary set of radio resources assigned to the corresponding cell. The usage of an identifier for each auxiliary set of radio resources provides the advantage that the second number of auxiliary sets of radio resources can be distinguished from each other in a simple way, namely by an identifier. The identifier, which is for example a number that is assigned to each auxiliary set of radio resources, is therefore different for each auxiliary set of radio resources.

In accordance with an embodiment of the invention, the method further comprises the step of receiving a second message from a mobile station, wherein the mobile station is served by a first cell having assigned a first auxiliary set of radio resources with a first identifier, and wherein the message comprises the identifiers of the auxiliary sets of radio resources that have been assigned to the neighboring cells of the first cell. The method further comprises the step of identifying the auxiliary sets of radio resources that have been assigned to the neighboring cells and the step of determining if a first auxiliary set of radio resources has the lowest possible interference probability with the auxiliary sets of radio resources of the neighboring cells. The method further comprises the step of assigning a second auxiliary set of radio resources to the first cell if the second auxiliary set of radio resources has a lower possible interference probability with the auxiliary set of radio resources of the neighboring cells. As mentioned before, one of the second number of auxiliary sets of radio resources is assigned to each cell of the cellular communication network. Thus the first auxiliary set of radio resources has been assigned to the first cell that serves the mobile station. As the mobile station tries to detect from time to time other cells that are usually adjacent to the first cell and as these cells send for example in a broadcast message the identifier of the auxiliary set of radio resource that is assigned to these cells, the first cell gets notice about the auxiliary sets of radio resources that are used by the neighboring cells as it receives the second message from the mobile station. It can therefore be determined if the first auxiliary set of radio resources has the lowest possible interference probability with respect to all combinations of the auxiliary sets of radio resources of the neighboring cells. If there is another second auxiliary set of radio resources that provides lower possible interference probability with the auxiliary sets of radio resources of the neighboring cells then the first auxiliary set of radio resources will be replaced by the second auxiliary set of radio resources. This provides the advantage that the various auxiliary sets of radio resources can be assigned to the cells in a random manner. The cells or the managing entities of the cells such as the schedulers (each cell usually has one scheduler) can then determine through the second message that is provided by the mobile station which auxiliary sets of radio resources are used by the neighboring cells and could then replace the first auxiliary set of radio resources by the second auxiliary set of radio resources so that the interference probability with the auxiliary sets of radio resources of the neighboring cells is minimized.

In accordance with an embodiment of the invention, the second message is received by a base station of the first cell and the second message is a measurement report message.

In accordance with an embodiment of the invention, the first message is sent from a base station of the mobile communication network, wherein the base station is serving the corresponding mobile station in the cell.

In accordance with an embodiment of the invention, the first message is a broadcast message distributed on the broadcast channel of the cell or the first message is a message sent a dedicated signaling channel.

In accordance with an embodiment of the invention, the interference probability between an auxiliary set of radio resources assigned to a first cell and another auxiliary set of radio resources assigned to a neighboring cell is determined by taking into account the number of times the second message comprising the identifier of the other auxiliary set of radio resources is received by the first cell. The number of times, the identifier is received is therefore used as a measure of the overlap between the first and the neighboring cell. The usage of the number of times an identifier is received is in particular advantageous when the interference probabilities of the auxiliary set of radio resources used by the first cell with two different auxiliary sets of radio resources, wherein each is used by a different neighboring cell, are to be compared.

In accordance with an embodiment of the invention, a total interference probability between a first auxiliary set of radio resources assigned to a first cell and other auxiliary sets of radio resources assigned to the neighboring cells is determined by use of all interference probabilities between the first auxiliary set and the other auxiliary sets of radio resources and by use of information received from measurement reports of mobile stations served by the first cell. The first cell can for example be the neighboring cell of a second cell and of a third cell. The first cell uses a first auxiliary set of radio resources comprising three subsets of radio resources A, B, C, wherein the usage probabilities $p_A$, $p_B$, and $p_c$ are assigned to A, B, or C, respectively. The second cell uses a second auxiliary set of radio resources comprising the three subsets of radio resources A, B, C, wherein the usage probabilities $q_A$, $q_B$, and $q_C$ are assigned to A, B, or C, respectively. The interference probability I(1,2) between the first and second auxiliary sets of radio resources can then be determined by I(1,2) = $1/3*(p_A q_A + p_B q_B + p_C q_C)$, whereby the factor of 1/3 is used as normalization. The third cell uses a third auxiliary set of radio resources comprising the three subsets of radio resources A, B, C, wherein the usage probabilities $r_A$, $r_B$, and $r_C$ are assigned to A, B, or C, respectively. The interference probability I(1,3) between the first and third auxiliary sets of radio resources can then be determined by I(1,3) = $1/3*(p_A r_A + p_B r_B + p_C r_C)$, whereby the factor of 1/3 is used as normalization. The measurement report that is sent by mobile stations to the first zone can comprise information about the first, second and third zone. For example, the signal powers $P_1$, $P_2$, $P_3$ as received by the mobile stations of the signals emitted by the first, second and third zone can be detected by the mobile stations and sent to the first zone. From each measurement report that comprises, e.g., $P_1$ and $P_2$ the value

$$G_{12} = \sum_{\Delta t} f(P_1, P_2) \cdot I(1,2)$$

can be determined, wherein for example f($P_2$, $P_1$) = $P_2 / P_1$, and wherein each measurement report received during the time interval Δt and which comprises P2 and P1 is counted once.

Similarly, the value

$$G_{13} = \sum_{\Delta t} g(P_1, P_3) \cdot I(1,3)$$

can be determined, wherein for example $g(P_3, P_1) = P_3/P_1$. f and g are functions which can be modified.

The total interference probability Z of the first cell can be determined by $Z = G_{12}*I(1,2) + G_{13}*I(1,3)$. The first auxiliary set of radio resources can then be replaced by a fourth auxiliary set of radio resources and another total interference probability with the second and third auxiliary sets of radio resources can be determined as described above. If the other total interference probability leads to a smaller Z, then the corresponding fourth auxiliary set of radio resources will be further employed by the first cell. It is probably recommendable to apply a criterion if the first auxiliary set of radio resources shall be really replaced by the fourth set of radio resources in order to avoid cyclic or chaotic applying of auxiliary sets of radio resources.

In accordance with an embodiment of the invention, the cellular communication network comprises a scheduler for each cell, wherein the auxiliary sets of radio resources are assigned to the cells by the corresponding scheduler.

In accordance with an embodiment of the invention, the first number and the second number are given and the second number is equal to or larger than the maximum number of neighboring cells in the cellular communication network.

When designing a communication network, one aims for three major issues. The first issue is that the communication network should be able to provide continuous radio coverage. The second issue is that the quality of service provided to the network's user is relative high. The third issue relates to the network capacity which should be sufficient to handle a certain amount of traffic without a drop in the service quality. The method in accordance with the invention is particularly advantageous as each cell of the network is able to use the full set of available radio resources and as the interference between neighboring cells is nevertheless kept relatively low. This ensures that the network is able to handle a large amount of traffic without loss of service quality.

In another aspect the invention relates to a communication network component for allocating radio resources of a cellular communication network to cells of the cellular communication network, wherein the communication network component comprises means for determining a first number of subsets of radio resources from a given set of radio resources, means for determining a second number of auxiliary sets of radio resources, wherein each auxiliary set of radio resources comprises the subsets of radio resources in a predefined order, and means for assigning an auxiliary set of radio resources to each cell of the cellular communication network.

In accordance with an embodiment of the invention, the communication network component further comprises means for determining an interference probability for each combination of two auxiliary sets of radio resources, and means for assigning an auxiliary set of radio resources to each cell, wherein the auxiliary set of radio resources has the lowest possible interference probability with respect to the auxiliary sets of radio resources assigned to neighboring cells of each cell.

In accordance with an embodiment of the invention, the communication network component further comprises means for assigning an identifier to each auxiliary set of radio resources and means for initiating in each cell the sending of a first message, wherein the first message comprises the identifier of the auxiliary set of radio resources assigned to the corresponding cell.

In accordance with an embodiment of the invention, the communication network component further comprises means for receiving a second message from a mobile station, wherein the mobile station is served via a first cell having assigned first auxiliary set of radio resources with a first identifier, wherein the message comprises the identifiers of the auxiliary sets of radio resources that have been assigned to the neighboring cells of the first cell. The component further comprises means for identifying the auxiliary sets of radio resources that have been assigned to the neighboring cells and means for determining if the first auxiliary set of radio resources has the lowest possible interference probability with respect to the auxiliary sets of radio resources of the neighboring cells. The communication network component further comprises means for assigning a second auxiliary set of radio resources to the first cell if the second auxiliary set of radio resources has a lower possible interference probability with respect to the auxiliary sets of radio resources of the neighboring cells.

In another aspect the invention relates to a mobile station comprising means for receiving a first message from a first base station of a cellular communication network, wherein the first message comprises an identifier, wherein the identifier identifies an auxiliary set of radio resources, wherein the auxiliary set of radio resources is employed by the base station for communicating with the mobile station. The mobile station further comprises means for sending the identifier in a second message to a second base station, wherein the second base station is the serving base station of the mobile station.

In accordance with an embodiment of the invention, the mobile station is a mobile phone, a laptop, a PDA, or any other device which is connectable to a cellular communication network.

In another aspect the invention relates to a cellular communication network that comprises means for providing a set of radio resources, means for determining a first number of subsets of radio resources from the set of radio resources, means for determining a second number of auxiliary sets of radio resources, wherein each auxiliary set of radio resources comprises the subsets of radio resources in a predefined order. The cellular communication network further comprise means for assigning an auxiliary set of radio resources to each cell of the cellular communication network, wherein each cell allocates the subsets of radio resources comprised in the auxiliary set of radio resources according to the predefined order.

In accordance with an embodiment of the invention, the cellular communication network further comprises means for determining an interference probability for each combination of two auxiliary sets of radio resources and means for assigning an auxiliary set of radio resources to each cell, wherein the auxiliary set of radio resources has the lowest possible interference probability with respect to the auxiliary sets of radio resources assigned to neighboring cells of each cell.

In accordance with an embodiment of the invention, the cellular communication network further comprises means for assigning an identifier to each auxiliary set of radio resources and means for sending in each cell a first message, wherein the first message comprises the identifier of the auxiliary set of radio resources assigned to the corresponding cell.

In accordance with an embodiment of the invention, the cellular communication network further comprises means for receiving a second message from a mobile station, wherein the mobile station is served via a first cell which has assigned a first auxiliary set of radio resources with a first identifier, wherein the message comprises the identifiers of the auxiliary sets of radio resources that have been assigned to the neighboring cells of the first cell. The cellular communication network further comprises means for identifying the auxiliary sets of radio resources that have been assigned to the neighboring cells and means for determining if the first auxiliary set of radio resources has the lowest possible interference probability with respect to the auxiliary sets of radio resources of the neighboring cells. The cellular communication network further comprises means for assigning a second auxiliary set of radio resources to the first cell if the second auxiliary set of radio resources has a lower interference probability with respect to the auxiliary sets of radio resources of the neighboring cells.

In another aspect the invention relates to a computer program product for allocating radio resources of a cellular communication network to cells of the communication network, wherein the computer program product comprises computer executable instructions that are adapted to perform the method in accordance with the invention.

## Brief description of the drawings

A more complete understanding of the present invention may be obtained from consideration of the following detailed description in conjunction with the drawings in which:

Figure 1   shows a block diagram of a communication network,

Figure 2   shows a flow diagram which illustrates the basic steps performed by the method in accordance with the invention,

Figure 3   shows a list of auxiliary sets of radio resources.

## Detailed description

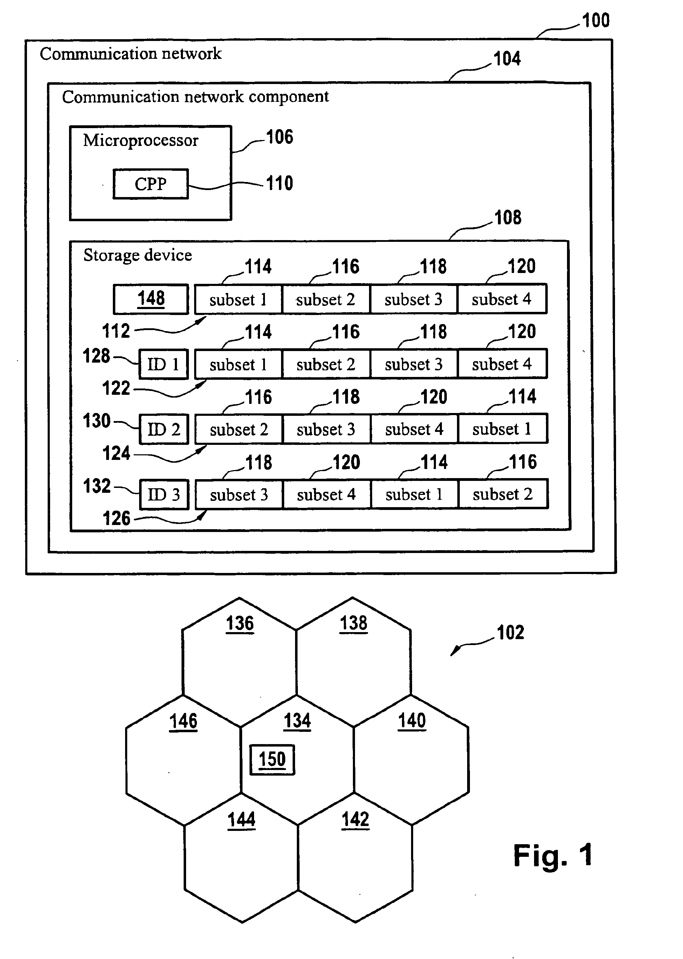

Fig. 1 shows a block diagram of a communication network 100. The communication network 100 comprises a communication network component 104. The communication network component 104 comprises a microprocessor 106 and a storage device 108. The communication network 100 comprises furthermore a plurality of cells 102. The plurality of cells 102 comprises the cells 134, 136, 138, 140, 142, 144, and 146. The microprocessor 106 executes a computer program product 110 which is stored on the storage device 108 and loaded into the microprocessor 106 when the communication network component 104 is started up.

The storage device 108 holds information of a given set of radio resources 112 that is available to and that can be used by the communication network 100 in order to provide radio coverage over the plurality of cells 102. The information can be held for example in the form of a list in which the available radio resources of the set of radio resources 112 are listed. A given first number of subsets of radio resources are selected from the set of radio resources 112. In the case depicted in fig. 1, the given number corresponds to 4 subsets of radio resources, namely the subsets of radio resources 114, 116, 118, and 120 which are determined from the set of radio resources 112. In other words, the set of radio resources 112 is divided into the 4 subsets of radio resources 114, 116, 118, and 120.

Three auxiliary sets of radio resources 122, 124, and 126 are then determined by the computer program product 110 that comprise the subsets of radio resources 114, 116, 118, and 120. The auxiliary sets of radio resources 122, 124, and 126 can also be represented as lists that are stored on the storage device 108. In each list, the subsets of radio resources 114, 116, 118, and 120 are listed in a predefined order which is different for each list. For example, in the auxiliary set of radio resources 122, the subsets of radio resources are listed in the order: subset of radio resources 114, subset of radio resources 116, subset of radio resources 118, and subset of radio resources 120. In contrast, the subsets of radio resources are listed in the auxiliary set of radio resources 124 in the following order: subset of radio resources 116, subset of radio resources 118, subset of radio resources 120, and subset of radio resources 114.

The order of the subsets of radio resources in an auxiliary set of radio resources 122, 124, and 126 defines the priority order according to which the subsets of radio resources can be employed by the corresponding cells.

Furthermore, an identifier is assigned to each auxiliary set of radio resources. Thus the identifier 128 is assigned to the auxiliary set of radio resources 122, the identifier 130 is assigned to the auxiliary set of radio resources 124, and the identifier 132 is assigned to the auxiliary set of radio resources 126. The identifier is in essence a number by which the various auxiliary sets of radio resources can be distinguished from each other.

In accordance with an embodiment of the invention, one of the auxiliary sets of radio resources is assigned to each cell of the radio resources by the computer program 110. Therefore the computer program 110 determines interference probabilities 148 for each combination of two auxiliary sets of radio resources by taking into account the average amount of users and data traffic that has to be handled by the plurality of cells 102. The interference probabilities 148 can also be stored for example in a list on the storage device 108. Assuming that the interference probability for each combination of two auxiliary sets of radio resources 122, 124, and 126 is identical, then the auxiliary sets of radio resources have to be distributed in a way to the plurality of cells 102 so that different auxiliary sets of radio resources are assigned to neighboring cells. Thus, the auxiliary set of radio resources 122 can be assigned to the cell 134. The auxiliary set of radio resources 124 can be assigned to cell 136, 140, and 144. The auxiliary set of radio resources 126 can then be assigned to the cells 138, 142, and 146.

In accordance with another embodiment of the invention, the interference probabilities for each combination of two auxiliary sets of radio resources are determined by the computer program 110 and are therefore known. The interference probabilities 148 can also be stored for example in a list on the storage device 108. The auxiliary sets of radio resources can then be distributed or assigned to the cells 134, ..., 146 in a random way. Each cell distributes a broadcast message which is received by a mobile station that might also be in a neighboring cell. The cell 134 can for example serve the mobile station 150. Assume that only the auxiliary set of radio resources 122 has been assigned to all cells 134, ..., 146. A mobile station 150 is also detecting the broadcast messages of neighboring cells. Each cell includes in its broadcast message in accordance with the invention the identifier of the auxiliary set of radio resources that is employed by the cell. Thus each broadcast message that is received by the mobile station 150 contains the identifier 128. This identifier 128 is sent in a second message to the serving cell 134. The serving cell therefore obtains the knowledge that the surrounding cells employ the same auxiliary set of radio resources. It therefore determines an auxiliary set of radio resources that provides the lowest possible interference probability with the auxiliary set of radio resources 122. This is according to the assumptions made before (interference probability between two different auxiliary sets of radio resources is identical), either the auxiliary set of radio resources 124 or the auxiliary set of radio resources 126. The auxiliary set of radio resources 122 is therefore replaced by, e.g., the auxiliary set of radio resources 124. The same procedure is performed in the other cells, so that at the end all cells have assigned the optimal auxiliary set of radio resources.

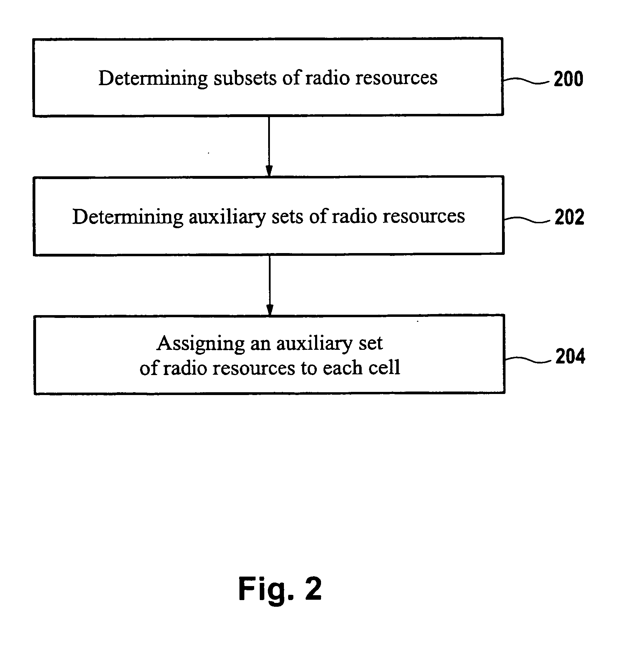

Fig. 2 shows a flow diagram that illustrates the basic steps that are performed by the method in accordance with the invention. In step 200 a first number of subsets of radio resources are determined from a given set of radio resources. In step 202 a second number of auxiliary sets of radio resources are determined, wherein each auxiliary sets of radio resources comprises the subsets of radio resources in a predefined order. In step 204 one of the second numbers of auxiliary sets of radio resources is assigned to each cell of the cellular communication network.

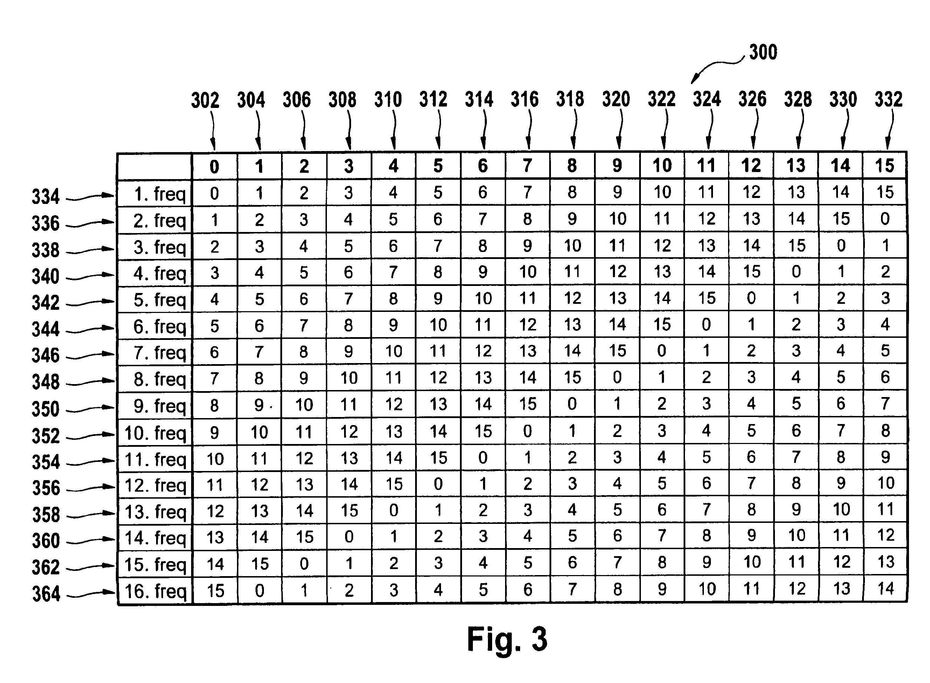

Fig. 3 shows a list 300 of N=16 auxiliary sets of radio resources 302, 304, 306, 308, 310, 312, 314, 316, 318, 320, 322, 324, 326, 328, 330, and 332. Each auxiliary set of radio resources is identifiable by an identifier which corresponds to the bold number in the first row of the table. Each auxiliary set of radio resources 302,..., 332 comprises sub- carrier signals 334, 336, 338, 340, 342, 344, 346, 348, 350, 352, 354, 356, 358, 360, 362, 364. Each sub-carrier signal 334,..., 364 is at a different frequency (1. freq. to 16. freq). The numbers ranging from 0 to 15 in each column representing an auxiliary set of radio resources 302,..., 332 denotes the predefined order according to which the various sub-carrier signals 334,..., 364 are allocated by a cell using the corresponding auxiliary set of radio resources. For example, the auxiliary set of radio resources 302 comprises the sub-carrier signal 334 with priority 0, sub-carrier signal 336 with priority 1, etc., whereby the lower the priority the sooner the respective signals are employed.

The auxiliary sets of radio resources 302 and 304 are different from each other as the predefined order assigned to a sub-carrier signal is shifted by one. Thus, the interference probability between the two sets of radio resources will be zero when only the sub-carriers with priority 0 are employed. In contrast, the auxiliary sets of radio resources 302 and 318 are different from each other as the predefined order assigned to a sub-carrier signal is shifted by 8. The two sets of radio resources 302 and 318 therefore start interfering when for example the auxiliary set of radio resources 302 uses the sub-carrier signal 350 which is at a priority of 9 and the other set uses at least the sub-carrier signal 334. The interference probability between the two sets of radio resources 302 and 318 is zero as long as sub-carriers with a priority less then 9 are employed. Thus, if neighboring cells employ the two sets of radio resources 302 and 318, then interference does not occur even if the cells have to manage and a handle a larger amount of data traffic. In contrast, interference might occur at much lower data traffic rates if the two cells employ the auxiliary sets of radio resources 302 and 304.

Thus, the various auxiliary sets of radio resources should be assigned to neighboring cells so that ideally the difference between the identifier of the auxiliary sets corresponds to N/2 = 8 in the case when the ordering is defined as in list 300. Such an assignment can be done by an administrator or a scheduler of the cell or on the basis of a self-assignment as has been described before in Fig. 1.

List of Reference Numerals

| 100 | Communication network |
|-----|----------------------|
| 102 | Plurality of cells |
| 104 | Communication network component |
| 106 | Microprocessor |
| 108 | Storage device |
| 110 | Computer program product |
| 112 | Set of radio resources |
| 114 | Subset of radio resources |
| 116 | Subset of radio resources |
| 118 | Subset of radio resources |
| 120 | Subset of radio resources |
| 122 | Auxiliary set of radio resources |
| 124 | Auxiliary set of radio resources |
| 126 | Auxiliary set of radio resources |
| 128 | Identifier |
| 130 | Identifier |
| 132 | Identifier |
| 134 | Cell |
| 136 | Cell |
| 138 | Cell |
| 140 | Cell |
| 142 | Cell |
| 144 | Cell |
| 146 | Cell |
| 148 | List of interference probabilities |
| 150 | Mobile station |

(continued)

| 300 | List |
|-----|------|
| 302 | Auxiliary set of radio resources |
| 304 | Auxiliary set of radio resources |
| 306 | Auxiliary set of radio resources |
| 308 | Auxiliary set of radio resources |
| 310 | Auxiliary set of radio resources |
| 312 | Auxiliary set of radio resources |
| 314 | Auxiliary set of radio resources |
| 316 | Auxiliary set of radio resources |
| 318 | Auxiliary set of radio resources |
| 320 | Auxiliary set of radio resources |
| 322 | Auxiliary set of radio resources |
| 324 | Auxiliary set of radio resources |
| 324 | Auxiliary set of radio resources |
| 326 | Auxiliary set of radio resources |
| 328 | Auxiliary set of radio resources |
| 330 | Auxiliary set of radio resources |
| 332 | Auxiliary set of radio resources |
| 334 | Sub-carrier signal |
| 336 | Sub-carrier signal |
| 338 | Sub-carrier signal |
| 340 | Sub-carrier signal |
| 342 | Sub-carrier signal |
| 344 | Sub-carrier signal |
| 346 | Sub-carrier signal |
| 348 | Sub-carrier signal |
| 350 | Sub-carrier signal |
| 352 | Sub-carrier signal |
| 354 | Sub-carrier signal |
| 356 | Sub-carrier signal |
| 358 | Sub-carrier signal |
| 360 | Sub-carrier signal |
| 362 | Sub-carrier signal |
| 364 | Sub-carrier signal |

**Claims**

1. A method of allocating radio resources of a cellular communication network (100) to cells (134,...,146) of said cellular communication network, said method comprising:

- determining a first number of subsets of radio resources (114,..., 120) from a given set of radio resources (112), wherein the interference probability between different subsets of radio resources is zero;
- determining a second number of auxiliary sets of radio resources (122, 124, 126), wherein each auxiliary set of radio resources comprises the subsets of radio resources in a predefined order, wherein the predefined order of an auxiliary set of radio resources varies from the predefined orders of all other auxiliary sets of radio resources, wherein the predefined order specifies in which order the subsets of radio resources comprised in an auxiliary set of radio resources can be employed by the cell for communication with a mobile station;
- assigning one of said second number of auxiliary sets of radio resources to each cell (134,..., 136) of said cellular communication network;

**characterised in that** said method further comprising:

- assigning an identifier (128, 130, 132) to each auxiliary set of radio resources (122, 124, 126);
- sending in each cell a first message, said first message comprising the identifier of the auxiliary set of radio resources assigned to the corresponding cell;
- receiving a second message from a mobile station (150), said mobile station being served via a first cell (134) having assigned a first auxiliary set of radio resources, said second message comprising the identifiers of the auxiliary sets of radio resources that have been assigned to the neighboring cells (136,...,146) of said first cell;
- identifying the auxiliary sets of radio resources that have been assigned to the neighboring cells;
- determining if said first auxiliary set of radio resources has the lowest possible interference probability with respect to the auxiliary sets of radio resources of the neighboring cells;
- assigning a second auxiliary set of radio resources to the first cell as a replacement for the first auxiliary set of radio resources if the second auxiliary set of radio resources has a lower possible interference probability with the auxiliary sets of radio resources of the neighboring cells than the first auxiliary set of radio resources.

2. The method of claim 1, wherein different auxiliary sets of radio resources are assigned to neighboring cells.

3. The method of claim 1 or 2, said method further comprising:

- determining an interference probability for each combination of two auxiliary sets of radio resources (122, 124, 126);
- assigning an auxiliary set of radio resources to each cell (134,...,146),

wherein the auxiliary set of radio resources provides a low interference probability with the auxiliary sets of radio resources that are assigned to neighboring cells of each cell.

4. A communication network component (104) for allocating radio resources of a cellular communication network (100) to cells (134,...,146) of said cellular communication network, said communication network component comprising:

- means for determining a first number of subsets of radio resources (114,...,120) from a given set of radio resources (112), wherein the interference probability between different subsets of radio resources is zero;
- means for determining a second number of auxiliary sets of radio resources (122, 124, 126), wherein each auxiliary set of radio resources comprises the subsets of radio resources in a predefined order, wherein the predefined order of an auxiliary set of radio resources varies from the predefined orders of all other auxiliary sets of radio resources, wherein the predefined order specifies in which order the subsets of radio resources comprised in an auxiliary set of radio resources can be employed by the cell for communication with a mobile station;
- means for assigning an auxiliary set of radio resources to each cell of the cellular communication network;

**characterised in that** said communication network component further comprising:

- means for assigning an identifier (128, 130, 132) to each auxiliary set of radio resources (122, 124, 126);
- means for sending in each cell a first message, said first message comprising the identifier of the auxiliary set of radio resources assigned to the corresponding cell;
- means for receiving a second message from a mobile station (150), said mobile station being served via a first cell (134) having assigned a first auxiliary set of radio resources, said message comprising the identifiers of the auxiliary sets of radio resources that have been assigned to the neighboring cells (136,...,146) of said first cell;
- means for identifying the auxiliary sets of radio resources that have been assigned to the neighboring cells;
- means for determining if said first auxiliary set of radio resources has the lowest possible interference probability with respect to the auxiliary sets of radio resources of the neighboring cells;
- means for assigning a second auxiliary set of radio resources to the first cell as a replacement for the first auxiliary set of radio resources if the second auxiliary set of radio resources has a lower possible interference probability with the auxiliary sets of radio resources of the neighboring cells than the first auxiliary set of radio resources.

5. The communication network component of claim 4, further comprising:

- means for determining an interference probability for each combination of two auxiliary sets of radio resources;
- means for assigning an auxiliary set of radio resources to each cell, wherein the auxiliary set of radio resources has a interference probability with respect to the auxiliary sets of radio resources assigned to neighboring cells of each cell.

6. A cellular communication network (100) comprising one or more communication network components according to claim 4.

7. A computer program product (110) for allocating radio resources of a cellular communication network to cells of the communication network, said computer program product comprising computer executable instructions, said instructions being adapted to performing the steps:

- determining a first number of subsets of radio resources (114,...,120) from a given set of radio resources (112), wherein the interference probability between different subsets of radio resources is zero;
- determining a second number of auxiliary sets of radio resources (122, 124, 126), wherein each auxiliary set of radio resources comprises the subsets of radio resources in a predefined order, wherein the predefined order of an auxiliary set of radio resources varies from the predefined orders of all other auxiliary sets of radio resources, wherein the predefined order specifies in which order the subsets of radio resources comprised in an auxiliary set of radio resources can be employed by the cell for communication with a mobile station;
- assigning an auxiliary set of radio resources to each cell (134,...,146) of said cellular communication network (100);

**characterised in that** said instructions being further adapted to performing the steps:

- assigning an identifier (128, 130, 132) to each auxiliary set of radio resources (122, 124, 126);
- sending in each cell a first message, said first message comprising the identifier of the auxiliary set of radio resources assigned to the corresponding cell;
- receiving a second message from a mobile station (150), said mobile station being served via a first cell (134) having assigned a first auxiliary set of radio resources, said second message comprising the identifiers of the auxiliary sets of radio resources that have been assigned to the neighboring cells (136,...,146) of said first cell;
- identifying the auxiliary sets of radio resources that have been assigned to the neighboring cells;
- determining if said first auxiliary set of radio resources has the lowest possible interference probability with respect to the auxiliary sets of radio resources of the neighboring cells;
- assigning a second auxiliary set of radio resources to the first cell as a replacement for the first auxiliary set of radio resources if the second auxiliary set of radio resources has a lower possible interference probability with the auxiliary sets of radio resources of the neighboring cells than the first auxiliary set of radio resources.

**Patentansprüche**

1. Ein Verfahren zum Zuteilen von Funkbetriebsmitteln eines zellularen Kommunikationsnetzwerks (100) an Zellen (134, ..., 146) des besagten zellularen Kommunikationsnetzwerks, wobei das Verfahren umfasst:

- Bestimmen einer ersten Anzahl von Funkbetriebsmittel-Untereinheiten (114, ..., 120) einer gegebenen Funkbetriebsmittel-Einheit (112), wobei die Wahrscheinlichkeit einer Interferenz zwischen verschiedenen Funkbetriebsmittel-Untereinheiten null beträgt;
- Bestimmen einer zweiten Anzahl von Funkbetriebsmittel-Hilfseinheiten (122, 124, 126), wobei jede Funkbetriebsmittel-Hilfseinheit die Funkbetriebsmittel-Untereinheiten in einer vorbestimmten Reihenfolge umfasst, wobei sich die vorbestimmte Reihenfolge einer Funkbetriebsmittel-Hilfseinheit von den vorbestimmten Reihenfolgen aller anderen Funkbetriebsmittel-Hilfseinheiten unterscheidet, wobei die vorbestimmte Reihenfolge festlegt, in welcher Reihenfolge die in einer Funkbetriebsmittel-Hilfseinheit enthaltenen Funkbetriebsmittel-Untereinheiten von der Zelle für die Kommunikation mit einer Mobilstation eingesetzt werden können;

- Zuteilen einer der besagten zweiten Anzahl von Funkbetriebsmittel-Hilfseinheiten an jede Zelle (134, ..., 136) des besagten zellularen Kommunikationsnetzwerks;

**dadurch gekennzeichnet, dass** das besagte Verfahren weiterhin umfasst:

- Zuteilen einer Kennung (128, 130, 132) an jede Funkbetriebsmittel-Hilfseinheit (122, 124, 126);
- Senden einer ersten Nachricht in jeder Zelle, wobei die besagte erste Nachricht die der entsprechenden Zelle zugeordnete Kennung der Funkbetriebsmittel-Hilfseinheit enthält;
- Empfangen einer zweiten Nachricht von einer Mobilstation (150), wobei der besagten Mobilstation, welche über eine erste Zelle (134) bedient wird, eine erste Funkbetriebsmittel-Hilfseinheit zugeordnet wird, wobei die besagte zweite Nachricht die Kennungen der Funkbetriebsmittel-Hilfseinheiten enthält, welche den Nachbarzellen (136, ..., 146) der besagten ersten Zelle zugeordnet sind:
- Identifizieren der Funkbetriebsmittel-Hilfseinheiten, welche den Nachbarzellen zugeordnet sind;
- Ermitteln, ob die besagte erste Funkbetriebsmittel-Hilfseinheit die niedrigst mögliche Wahrscheinlichkeit einer Interferenz in Bezug auf die Funkbetriebsmittel-Hilfseinheit der Nachbarzellen aufweist;
- Zuteilen einer zweiten Funkbetriebsmittel-Hilfseinheit an die erste Zelle als Ersatz für die erste Funkbetriebsmittel-Hilfseinheit, wenn die zweite Funkbetriebsmittel-Hilfseinheit eine niedrigere mögliche Wahrscheinlichkeit einer Interferenz mit den Funkbetriebsmittel-Hilfseinheiten der Nachbarzellen als die erste Funkbetriebsmittel-Hilfseinheit aufweist.

2. Das Verfahren nach Anspruch 1, wobei den Nachbarzellen verschiedene Funkbetriebsmittel-Hilfseinheiten zugeteilt werden.

3. Das Verfahren nach Anspruch 1 oder 2, wobei das besagte Verfahren weiterhin umfasst:

- Bestimmen der Wahrscheinlichkeit einer Interferenz für jede Kombination von zwei Funkbetriebsmittel-Hilfseinheiten (122, 124, 126);
- Zuordnen einer Funkbetriebsmittel-Hilfseinheit an jede Zelle (134, ..., 146), wobei die Funkbetriebsmittel-Hilfseinheit einer Wahrscheinlichkeit einer Interferenz mit den Funkbetriebsmittel-Hilfseinheiten, welche den Nachbarzellen jeder Zelle zugeteilt sind, aufweist.

4. Eine Kommunikationsnetzwerk-Komponente (104) zum Zuteilen von Funkbetriebsmitteln eines zellularen Kommunikationsnetzwerks (100) an Zellen (134, ..., 146) des besagten zellularen Kommunikationsnetzwerks, wobei die besagte Kommunikationsnetzwerk-Komponente umfasst:

- Mittel zum Bestimmen einer ersten Anzahl von Funkbetriebsmittel-Untereinheiten (114, ..., 120) einer gegebenen Funkbetriebsmittel-Einheit (112), wobei die Wahrscheinlichkeit einer Interferenz zwischen verschiedenen Funkbetriebsmittel-Untereinheiten null beträgt;
- Mittel zum Bestimmen einer ersten Anzahl von Funkbetriebsmittel-Untereinheiten (114, ..., 120) einer gegebenen Funkbetriebsmittel-Einheit (112), wobei die Wahrscheinlichkeit einer Interferenz zwischen verschiedenen Funkbetriebsmittel-Untereinheiten null beträgt;
- Bestimmen einer zweiten Anzahl von Funkbetriebsmittel-Hilfseinheiten (122, 124, 126), wobei jede Funkbetriebsmittel-Hilfseinheit die Funkbetriebsmittel-Untereinheiten in einer vorbestimmten Reihenfolge umfasst, wobei sich die vorbestimmte Reihenfolge einer Funkbetriebsmittel-Hilfseinheit von den vorbestimmten Reihenfolgen aller anderen Funkbetriebsmittel-Hilfseinheiten unterscheidet, wobei die vorbestimmte Reihenfolge festlegt, in welcher Reihenfolge die in einer Funkbetriebsmittel-Hilfseinheit enthaltenen Funkbetriebsmittel-Untereinheiten von der Zelle für die Kommunikation mit einer Mobilstation eingesetzt werden können;
- Mittel zum Zuordnen einer Funkbetriebsmittel-Hilfseinheit an jede Zelle des zellularen Kommunikationsnetzwerks;

**dadurch gekennzeichnet, dass** die besagte Kommurlikationsnetzwerk-Komponente weiterhin umfasst:

- Mittel zum Zuteilen einer Kennung (128, 130, 132) an jede Funkbetriebsmittel-Hilfseinheit (122, 124, 126);
- Mittel zum Senden einer ersten Nachricht in jeder Zelle, wobei die besagte erste Nachricht die der entsprechenden Zelle zugeteilte Kennung der Funkbetriebsmittel-Hilfseinheit enthält;
- Mittel zum Empfangen einer zweiten Nachricht von einer Mobilstation (150), wobei der besagten Mobilstation, welche über eine erste Zelle (134) bedient wird, eine erste Funkbetriebsmittel-Hilfseinheit zugeordnet wird, wobei die besagte zweite Nachricht die Kennungen der Funkbetriebsmittel-Hilfseinheiten enthält, welche den Nachbarzellen (136, .... 146) der besagten ersten Zelle zugeordnet sind;
- Mittel zum Identifizieren der Funkbetriebsmittel-Hilfseinheiten, welche den Nachbarzellen zugeordnet sind;
- Mittel zum Ermitteln, ob die besagte erste Funkbetriebsmittel-Hilfseinheit die niedrigste mögliche Wahrscheinlichkeit einer Interferenz in Bezug auf die Funkbetriebsmittel-Hilfseinheit der Nachbarzellen aufweist;
- Mittel zum Zuteilen einer zweiten Funkbetriebsmittel-Hilfseinheit an die erste Zelle als Ersatz für die erste Funkbetriebsmittel-Hilfseinheit, wenn die zweite Funkbetriebsmittel-Hilfseinhelt eine niedrigere mögliche Wahrscheinlichkeit einer Interferenz mit den Funkbetriebsmittel-Hilfseinheiten der Nachbarzellen als die erste Funkbetriebsmittel-Hilfseinheit aufweist.

**5.** Die Kommunikationsnetzwerk-Komponente nach Anspruch 4, weiterhin umfassend:

- Mittel zum Bestimmen der Wahrscheinlichkeit einer Interferenz für jede Kombination von zwei Funkbetriebsmlttel-Hilfseinheiten;
- Mittel zum Zuordnen einer Funkbetriebsmittel-Hilfseinheit an jede Zelle, wobei die Funkbetriebsmittel-Hilfseinheit eine Wahrscheinlichkeit einer Interferenz in Bezug auf die Funkbetriebsmittel-Hilfseinheiten, welche den Nachbarzellen jeder Zelle zugeteilt sind, aufweist.

**6.** Ein zellulares Kommunikationsnetzwerk (100), welches eine oder mehrere Kommunikationsnetzwerk-Komponenten nach Anspruch 4 umfasst.

**7.** Ein Computerprogramm-Produkt (110) zum Zuteilen von Funkbetriebsmitteln eines zellularen Kommunikationsnetzwerks an Zellen des Kommunikationsnetzwerks, wobei das besagte Computerprogramm-Produkt computerausführbare Befehle umfasst, wobei die besagten Befehle fähig sind, folgende Schritte auszuführen:

- Bestimmen einer ersten Anzahl von Funkbetriebsmittel-Untereinheiten (114, ..., 120) einer gegebenen Funkbetriebsmittel-Einheit (112), wobei die Wahrscheinlichkeit einer Interferenz zwischen verschiedenen Funkbetriebsmittel-Untereinheiten null beträgt;
- Bestimmen einer zweiten Anzahl von Funkbetriebsmittel-Hilfseinheiten (122, 124. 126), wobei jede Funkbetriebsmittel-Hilfseinheit die Funkbetriebsmittel-Untereinheiten in einer vorbestimmten Reihenfolge umfasst, wobei sich die vorbestimmte Reihenfolge einer Funkbetriebsmittel-Hilfseinheit von den vorbestimmten Reihenfolgen aller anderen Funkbetriebsmittel-Hilfseinheiten unterscheidet, wobei die vorbestimmte Reihenfolge festlegt, in welcher Reihenfolge die in einer Funkbetriebsmittel-Hilfseinheit enthaltenen Funkbetriebsmittel-Untereinheiten von der Zelle für die Kommunikation mit einer Mobilstation eingesetzt werden können;
- Zuteilen einer Funkbetriebsmittel-Hilfseinheit an jede Zelle (134, ..., 136) des besagten zellularen Kommunikationsnetzwerks (100);

**dadurch gekennzeichnet, dass** die besagten Befehle weiterhin fähig sind, folgende Schritte auszuführen:

- Zuteilen einer Kennung (128, 130, 132) an jede Funkbetriebsmittel-Hilfseinheit (122, 124, 126);
- Senden einer ersten Nachricht in jeder Zelle, wobei die besagte erste Nachricht die der entsprechenden Zelle zugeteilte Kennung der Funkbetriebsmittel-Hilfseinheit enthält;
- Empfangen einer zweiten Nachricht von einer Mobilstation (150), wobei der besagten Mobilstation, welche über eine erste Zelle (134) bedient wird, eine erste Funkbetriebsmittel-Einheit zugeordnet wird, wobei die besagte zweite Nachricht die Kennungen der Funkbetriebsmittel-Hilfseinheiten enthält, welche den Nachbarzellen (136, ,.., 146) der besagten ersten Zelle zugeordnet sind;
- Identifizieren der Funkbetriebsmittel-Hilfseinheiten, welche den Nachbarzellen zugeordnet sind:
- Ermitteln, ob die besagte erste Funkbetriebsmittel-Hilfseinheit die niedrigste mögliche Wahrscheinlichkeit einer Interferenz in Bezug auf die Funkbetriebsmittel-Hilfseinheit der Nachbarzellen aufweist;
- Zuteilen einer zweiten Funkbetriebsmittel-Hilfseinheit an die erste Zelle als Ersatz für die erste Funkbetriebsmittel-Hilfseinheit, wenn die zweite Funkbetriebsmittel-Hilfseinheit eine niedrigere mögliche Wahrscheinlichkeit einer Interferenz mit den Funkbetriebsmittel-Hilfseinheiten der Nachbarzellen als die erste Funkbetriebsmittel-Hilfseinheit aufweist.

**Revendications**

**1.** Procédé d'allocation de ressources de radiocommunication d'un réseau de communication cellulaire (100) à des cellules (134, ..., 146) dudit réseau de communication cellulaire, ledit procédé comprenant :

- la détermination d'un premier nombre de sous-ensembles de ressources radio (114, ..., 120) parmi un ensemble donné de ressources radio (112), dans lequel la probabilité d'interférences entre les différents sous-ensembles de ressources radio est égale à zéro :
- la détermination d'un second nombre d'ensembles auxiliaires de ressources radio (122, 124, 126), dans lequel chaque ensemble auxiliaire de ressources radio comprend les sous-ensembles de ressources radio dans un ordre prédéfini, dans lequel l'ordre prédéfini d'un ensemble auxiliaire de ressources radio varie à partir des ordres prédfinis de tous les autres ensembles auxiliaires de resources radio, dans lequel l'ordre prédéfini spécifie dans quel ordre les sous-ensembles de ressources radio compris dans un ensemble auxiliaire de ressources radio peuvent être employés par la cellule pour communiquer avec une station mobile ;
- l'assignation de l'un dudit second nombre d'ensembles auxiliaires de ressources radio à chaque cellule (134, ..., 136) dudit réseau de communication cellulaire ;

**caractérisé en ce que** ledit procédé comprend en outre :

- l'assignation d'un identifiant (128, 130, 132) à chaque ensemble auxiliaire de ressources radio (122, 124, 126) ;
- l'envoi dans chaque cellule d'un premier message, ledit premier message comprenant l'identifiant de l'ensemble auxiliaire de ressources radio assigné à la cellule correspondante ;
- la réception d'un second message en provenance d'une station mobile (150), ladite station mobile étant desservie via une pre cellule (134) à lequel est assigné un premier ensemble auxiliaire de ressources radio, ledit second message comprenant les identifiants des ensembles auxiliaires de ressources radio qui ont été assignés aux cellules voisines (136, ..., 146) de ladite première cellule ;
- l'identification des ensembles auxiliaires de ressources radio qui ont été assignés aux cellules voisines ;
- la détermination de si ledit premier ensemble auxiliaire de ressources radio a la probabilité d'interférences la plus faible possible par rapport aux ensembles auxiliaires de ressources radio des cellules voisines ;
- l'assignation d'un second ensemble auxiliaire de ressources radio à la première cellule en remplacement du premier ensemble auxiliaire de ressources radio si le second ensemble auxiliaire de ressources radio a une probabilité d'interférences plus faible avec les ensembles auxiliaires de ressources radio des cellules voisines qu'avec le premier ensemble auxiliaire de ressources radio.

2. Procédé selon la revendication 1, dans lequel différents ensembles auxiliaires de ressources radio sont assignés à des cellules voisines.

3. Procédé selon la revendication 1 ou 2, ledit procédé comprenant en outre :

- la détermination d'une probabilité d'interférences pour chaque combinaison de deux ensembles auxiliaires de ressources radio (122, 124, 126);
- l'assignation d'un ensemble auxiliaire de ressources radio à chaque cellule (134, ..., 146), dans lequel l'ensemble auxiliaire de ressources radio offre une faible probabilité d'interférences avec les ensembles auxiliaires de ressources radio qui sont assignés aux cellules voisines de chaque cellule.

4. Composant de réseau de communication (104) destiné à allouer des ressources de radiocommunication d'un réseau de communication cellulaire (100) à des cellules (134, ..., 146) dudit réseau de communication cellulaire, ledit composant de réseau comprenant :

- des moyens de détermination d'un premier nombre de sous-ensembles de ressources radio (114, ..., 120) parmi un ensemble donné de ressources radio (112), dans lequel la probabilité d'interférences entre les différents sous-ensembles de ressources radio est égale à zéro ;
- des moyens de détermination d'un second nombre d'ensembles auxiliaires de ressources radio (122, 124, 126), dans lequel chaque ensemble auxiliaire de ressources radio comprend les sous-ensembles de ressources radio dans un ordre prédéfini, dans lequel l'ordre prédéfini d'un ensemble auxiliaire de ressources radio varie à partir des ordres prédfinis de tous les autres ensembles auxiliaires de resources radio, dans lequel l'ordre prédéfini spécifie dans quel ordre les sous-ensembles de ressources radio compris dans un ensemble auxiliaire de ressources radio peuvent être employés par la cellule pour communiquer avec une station mobile :
- des moyens d'assignation de l'un dudit second nombre d'ensembles auxiliaires de ressources radio à chaque cellule (134, ..., 136) dudit réseau de communication cellulaire ;

**caractérisé en ce que** ledit composant de réseau de communication comprend en outre :

- des moyens d'assignation d'un identifiant (128, 130, 132) à chaque ensemble auxiliaire de ressources radio (122, 124, 126) ;
- des moyens d'envoi dans chaque cellule d'un premier message, ledit premier message comprenant l'identifiant de l'ensemble auxiliaire de ressources radio assigné à la cellule correspondante ;
- des moyens de réception d'un second message en provenance d'une station mobile (150), ladite station mobile étant desservie via une pre cellule (134) à lequel est assigné un premier ensemble auxiliaire de ressources radio, ledit message comprenant les identifiants des ensembles auxiliaires de ressources radio qui ont été assignés aux cellules voisines (136, ..., 146) de ladite première cellule ;
- des moyens d'identification des ensembles auxiliaires de ressources radio qui ont été assignés aux cellules voisines ;
- des moyens de détermination de si ledit premier ensemble auxiliaire de ressources radio a la probabilité d'interférences la plus faible possible par rapport aux ensembles auxiliaires de ressources radio des cellules voisines ;
- des moyens d'assignation d'un second ensemble auxiliaire de ressources radio à la première cellule en remplacement du premier ensemble auxiliaire de ressources radio si le second ensemble auxiliaire de ressources radio a une probabilité d'interférences plus faible avec les ensembles auxiliaires de ressources radio des cellules voisines qu'avec le premier ensemble auxiliaire de ressources radio.

5. Composant de réseau de communication selon la revendication 4, comprenant en outre :

- des moyens de détermination d'une probabilité d'interférences pour chaque combinaison de deux ensembles auxiliaires de ressources radio (122, 124, 126);
- des moyens d'assignation d'un ensemble auxiliaire de ressources radio à chaque cellule, dans lequel l'ensemble auxiliaire de ressources radio offre une probabilité d'interférences par rapport aux ensembles auxiliaires de ressources radio assignés aux cellules voisines de chaque cellule.

6. Réseau de communication cellulaire (100) comprenant un ou plusieurs composants de réseau de communication selon la revendication 4.

7. Produit programme informatique (110) destiné à allouer des ressources de radiocommunication d'un réseau de communication cellulaire à des cellules dudit réseau de communication cellulaire, ledit produit de programme informatique comprenant des instructions exécutables par ordinateur, lesdites instructions étant adaptées pour réaliser les étapes suivantes :

- la détermination d'un premier nombre de sous-ensembles de ressources radio (114, ..., 120) parmi un ensemble donné de ressources radio (112), dans lequel la probabilité d'interférences entre les différents sous-ensembles de ressources radio est égale à zéro ;
- la détermination d'un second nombre d'ensembles auxiliaires de ressources radio (122, 124, 126), dans lequel chaque ensemble auxiliaire de ressources radio comprend les sous-ensembles de ressources radio dans un ordre prédéfini, dans lequel l'ordre prédéfini d'un ensemble auxiliaire de ressources radio varie à partir des ordres prédfinis de tous les autres ensembles auxiliaires de resources radio, dans lequel l'ordre prédéfini spécifie dans quel ordre les sous-ensembles de ressources radio compris dans un ensemble auxiliaire de ressources radio peuvent être employés par la cellule pour communiquer avec une station mobile ;
- l'assignation de l'un dudit second nombre d'ensembles auxiliaires de ressources radio à chaque cellule (134, ..., 136) dudit réseau de communication cellulaire (100) ;

**caractérisé en ce que** lesdites instructions sont en outre adaptées pour réaliser les étapes suivantes :

- l'assignation d'un identifiant (128, 130, 132) à chaque ensemble auxiliaire de ressources radio (122, 124, 126) ;
- l'envoi dans chaque cellule d'un premier message, ledit premier message comprenant l'identifiant de l'ensemble auxiliaire de ressources radio assigné à la cellule correspondante ;
- la réception d'un second message en provenance d'une station mobile (150), ladite station mobile étant desservie via une pre cellule (134) à lequel est assigné un premier ensemble auxiliaire de ressources radio, ledit second message comprenant les identifiants des ensembles auxiliaires de ressources radio qui ont été assignés aux cellules voisines (136, ..., 146) de ladite première cellule ;
- l'identification des ensembles auxiliaires de ressources radio qui ont été assignés aux cellules voisines;
- la détermination de si ledit premier ensemble auxiliaire de ressources radio a la probabilité d'interférences la plus faible possible par rapport aux ensembles auxiliaires de ressources radio des cellules voisines ;

- l'assignation d'un second ensemble auxiliaire de ressources radio à la première cellule en remplacement du premier ensemble auxiliaire de ressources radio si le second ensemble auxiliaire de ressources radio a une probabilité d'interférences plus faible avec les ensembles auxiliaires de ressources radio des cellules voisines qu'avec le premier ensemble auxiliaire de ressources radio.

**100**

Communication network **104**

Communication network component

Microprocessor **106**

CPP **110**

**108**

Storage device

| | **114** | **116** | **118** | **120** |
|---|---|---|---|---|
| **148** | subset 1 | subset 2 | subset 3 | subset 4 |

**112**

| | | **114** | **116** | **118** | **120** |
|---|---|---|---|---|---|
| **128** | ID 1 | subset 1 | subset 2 | subset 3 | subset 4 |

**122**

| | | **116** | **118** | **120** | **114** |
|---|---|---|---|---|---|
| **130** | ID 2 | subset 2 | subset 3 | subset 4 | subset 1 |

**124**

| | | **118** | **120** | **114** | **116** |
|---|---|---|---|---|---|
| **132** | ID 3 | subset 3 | subset 4 | subset 1 | subset 2 |

**126**

**136**  **138**  **102**

**146**  **134**  **140**

**150**

**144**  **142**

# Fig. 1

```
┌─────────────────────────────────────────────────┐
│                                                 │
│      Determining subsets of radio resources     │────── 200
│                                                 │
└─────────────────────────────────────────────────┘
                        │
                        ▼
┌─────────────────────────────────────────────────┐
│                                                 │
│   Determining auxiliary sets of radio resources │────── 202
│                                                 │
└─────────────────────────────────────────────────┘
                        │
                        ▼
┌─────────────────────────────────────────────────┐
│              Assigning an auxiliary set          │
│           of radio resources to each cell        │────── 204
│                                                 │
└─────────────────────────────────────────────────┘
```

# Fig. 2

300

| | 0 (302) | 1 (304) | 2 (306) | 3 (308) | 4 (310) | 5 (312) | 6 (314) | 7 (316) | 8 (318) | 9 (320) | 10 (322) | 11 (324) | 12 (326) | 13 (328) | 14 (330) | 15 (332) |
|---|---|---|---|---|---|---|---|---|---|---|---|---|---|---|---|---|
| 1. freq (334) | 0 | 1 | 2 | 3 | 4 | 5 | 6 | 7 | 8 | 9 | 10 | 11 | 12 | 13 | 14 | 15 |
| 2. freq (336) | 1 | 2 | 3 | 4 | 5 | 6 | 7 | 8 | 9 | 10 | 11 | 12 | 13 | 14 | 15 | 0 |
| 3. freq (338) | 2 | 3 | 4 | 5 | 6 | 7 | 8 | 9 | 10 | 11 | 12 | 13 | 14 | 15 | 0 | 1 |
| 4. freq (340) | 3 | 4 | 5 | 6 | 7 | 8 | 9 | 10 | 11 | 12 | 13 | 14 | 15 | 0 | 1 | 2 |
| 5. freq (342) | 4 | 5 | 6 | 7 | 8 | 9 | 10 | 11 | 12 | 13 | 14 | 15 | 0 | 1 | 2 | 3 |
| 6. freq (344) | 5 | 6 | 7 | 8 | 9 | 10 | 11 | 12 | 13 | 14 | 15 | 0 | 1 | 2 | 3 | 4 |
| 7. freq (346) | 6 | 7 | 8 | 9 | 10 | 11 | 12 | 13 | 14 | 15 | 0 | 1 | 2 | 3 | 4 | 5 |
| 8. freq (348) | 7 | 8 | 9 | 10 | 11 | 12 | 13 | 14 | 15 | 0 | 1 | 2 | 3 | 4 | 5 | 6 |
| 9. freq (350) | 8 | 9 | 10 | 11 | 12 | 13 | 14 | 15 | 0 | 1 | 2 | 3 | 4 | 5 | 6 | 7 |
| 10. freq (352) | 9 | 10 | 11 | 12 | 13 | 14 | 15 | 0 | 1 | 2 | 3 | 4 | 5 | 6 | 7 | 8 |
| 11. freq (354) | 10 | 11 | 12 | 13 | 14 | 15 | 0 | 1 | 2 | 3 | 4 | 5 | 6 | 7 | 8 | 9 |
| 12. freq (356) | 11 | 12 | 13 | 14 | 15 | 0 | 1 | 2 | 3 | 4 | 5 | 6 | 7 | 8 | 9 | 10 |
| 13. freq (358) | 12 | 13 | 14 | 15 | 0 | 1 | 2 | 3 | 4 | 5 | 6 | 7 | 8 | 9 | 10 | 11 |
| 14. freq (360) | 13 | 14 | 15 | 0 | 1 | 2 | 3 | 4 | 5 | 6 | 7 | 8 | 9 | 10 | 11 | 12 |
| 15. freq (362) | 14 | 15 | 0 | 1 | 2 | 3 | 4 | 5 | 6 | 7 | 8 | 9 | 10 | 11 | 12 | 13 |
| 16. freq (364) | 15 | 0 | 1 | 2 | 3 | 4 | 5 | 6 | 7 | 8 | 9 | 10 | 11 | 12 | 13 | 14 |

Fig. 3

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050237989 A1
- US 20050096062 A1
- US 2006046734 A1
- US 20040131007 A1
- US 20060109865 A1

**Non-patent literature cited in the description**

- OFDM with interference control for improved HSDPA coverage. *3GPP, 3GPP meeting number 37,* May 2004, 1-11